# EUROPEAN PATENT APPLICATION

(11) **EP 4 131 758 A1**
(43) Date of publication of application: **08.02.2023**
(21) Application number: 21382739.7
(22) Date of filing: 05.08.2021
(51) Int. Cl.: H02M 1/36, H02M 3/00, H02M 3/22

(54) **RESONANT CONVERTER SYSTEM WITH SOFT START AND OUTPUT VOLTAGE CONTROL, AND CONTROL METHOD THEREOF**

(71) Applicant: Fico Triad, S.A., 08028 Barcelona (ES)
(72) Inventor: AGÜERA ARROYO, Enric, 08028 Barcelona (ES); DURÁN RIVAS, Raúl, 08028 Barcelona (ES); MARTÍN SEGURA, Guillermo, 08028 Barcelona (ES)
(74) Representative: Hoffmann Eitle

(57) **Abstract**

The invention refers to a soft-start and output voltage control technique for resonant converters. A first aspect of the invention refers to a resonant converter comprising: an input stage as a switch network including semiconductor switching devices, a resonant circuit, and a controller for controlling the switch network, wherein the controller is adapted to operate the resonant converter during a start up process, wherein the switching frequency and the duty-cycle are kept constant during a first time interval (t1). The invention also refers to a method for controlling a resonant converter, wherein the converter is started up by maintaining switching frequency and duty-cycle constant during a first time interval (t1). The converter is operated in a burst mode during the starting up process. The invention provides a fast and precise soft-start and output voltage control method for resonant converters, especially for light load conditions.

## Description

### Field and object of the invention

The present invention refers to control methods for resonant converters in general, and in particular the invention refers to a soft-start and output voltage control method for resonant converters.

An object of the invention is to provide a fast and precise soft-start process with output voltage and power accuracy control method for resonant converters, especially for light load operating conditions.

Another object of the invention is to provide a control method for resonant converters that reduces semiconductors stress, by limiting: inrush currents, fast voltage slopes and high voltage ripples.

The invention also refers to resonant converter systems operating under the above-mentioned method.

### Background of the invention

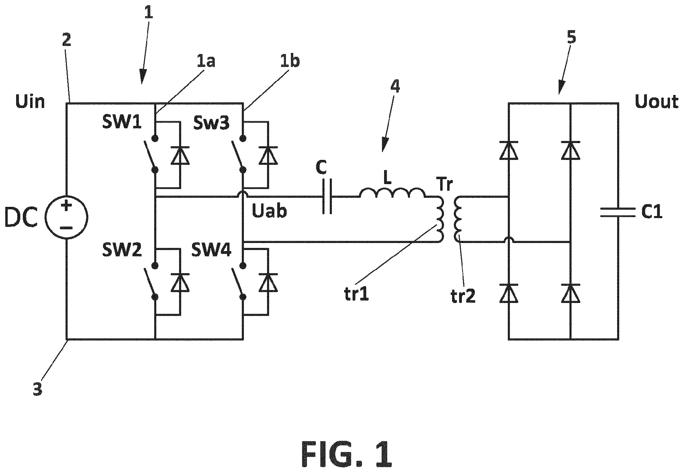

DC-DC converters are found in many applications from domestic to industrial or automotive field. Among the different DC-DC converters, LLC Series Resonant Converter topology (LLC-SRC) as the one shown in **Figure 1**, are widely used. This topology of converters belong to the so-called family of resonant converters that takes advantage of the resonance between their passive components to have soft-switching and, therefore, reduce the switching losses. Thanks to this reduction of losses, it allows increasing the efficiency of the converter and increase the switching frequency to reduce the size of the converter.

Resonant converters are usually controlled by means of the frequency variation. In case of LLC-SRC converters, the control tends to startup the converter with 0V at the output by switching at the highest frequency and 50% duty-cycle, and when the output voltage reaches the target voltage, the frequency is reduced to reach the output power demand.

A well-known problem of LLC-SRC and other resonant converters, is the inrush current that could damage the semiconductor switches during this start up process.

Some applications require high-power converters with fast output dynamics (e.g. precharging from 0V to 500V in less than 100 - 200ms). In turn, this implies reducing the output capacitors of the converter (e.g. 9 - 12uF for a 10 - 20kW equipment, instead of bulky aluminum capacitors of hundreds or thousands of uF). During the precharge condition (without any load at the output), the only load of the converter are the discharge resistors (e.g. 100 - 200kOhm resistors), so that, there is a very small power consumption, less than 1W load in a 10 - 20kW converter.

This situation causes a problem at the very beginning of the precharge (at 0V output), because the voltage increases suddenly without control, causing voltage overshoots and also high current surges. The small output capacitors with lower ESR worsen the situation during the first 2 - 20ms. This happens although the duty-cycle is low and the switching frequency is maximum (in the LLC-SCR case).

In addition to this, some applications require precharging (or voltage control) methods with high voltage accuracy/resolution (e.g. precharge setpoint with ±10V error in a 150 to 500V range). This is difficult to be obtained with the traditional approaches due to the aforementioned voltage increase worsen by the light load conditions. Therefore, it is necessary to start with a low duty-cycle, otherwise the voltage would increase too much at low voltages; and more discretization (e.g. with the burst mode) to cover a high output voltage range with enough accuracy/resolution.

These above-commented problems associated to inrush currents, have led to multiple solutions, such as: using phase-shift, PWM modulation, HB mode, duty-cycle variations, frequency modulation and burst sequences, among others.

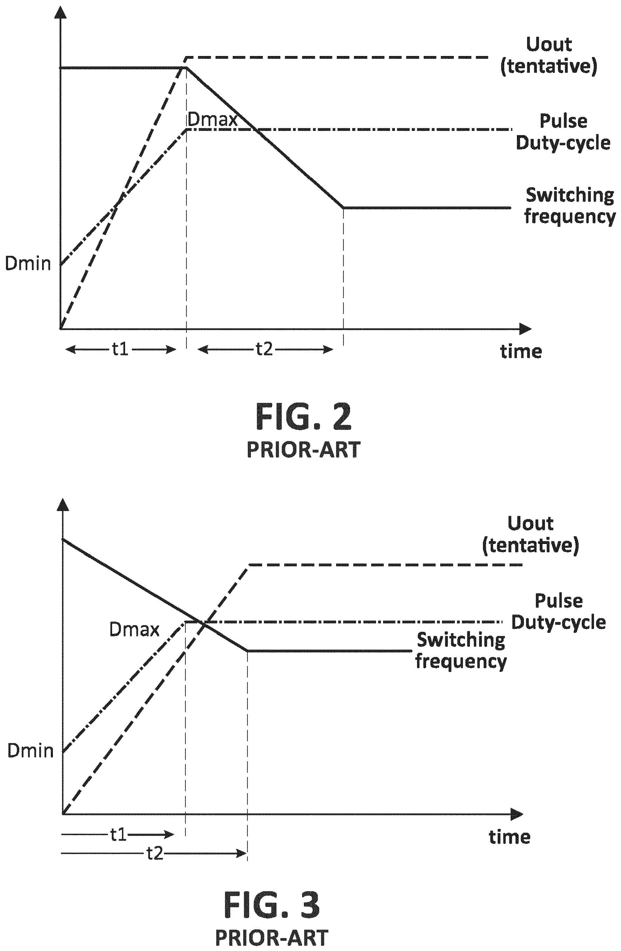

A classical approach to solve this issue is a soft-start method with 2 stages, as the one shown in **Figure 2****,** wherein a first stage with variable duty-cycle and fixed frequency is performed, until a target voltage is reached, and a second stage with fixed duty-cycle and variable frequency. The first stage with small power pulses delivered to the resonant tank can be done by varying the pulse width, so the duty-cycle, or varying the phase-shift between branches (in case of more than 1 branch) and maintaining the duty-cycle at 50%.

It is known a soft-start method which is started with a small duty-cycle that increases by means of phase-shift control between branches (t1 in **Figure 2****).**

It is also known to vary the duty-cycle during the soft-start but using curves (t1 in **Figure 2****,** but using optimized curves). Patent publications: US-8018740 B2 and US-20160181927 A1, describe two stages methods as the one in **Figure 2****.** Furthermore, it has been suggested using a first stage that calculates the turn-off (and so the duty) based on theoretical equations and afterwards diminishes the frequency until the output voltage is reached.

Patent publication US-20150280545 A1 describes a solution that takes advantage of using simpler controllers, and propose a method of start-up based on varying duty-cycle and frequency at the same time (see **Figure 3****)** starting from minimum duty-cycle and maximum frequency (the change in duty-cycle and frequency is based on 1 switch (top or bottom) or 2 switches; and it depends on a ramp or an exponential curve, starting from minimum duty and maximum frequency.

It is also known to use a burst method of controlling the converter, which is based on using 50% of duty, maximum frequency and enabling the converter ON and OFF to provide more or less power at lower voltage, as illustrated in **Figure 4****,** and as described in patent publication US-9893609 B1. This method takes advantage of Zero Voltage Switching (ZVS) at low output voltage and during start up. It is also known, to use the burst mode during light load and low output voltage situations.

The above-mentioned methods, reduce the stress of switches during the start up sequence, but they find many other problems in assessing correctly the cases where the converter has a high output power and high output voltage range of operation and a very light load (e.g. a very small output capacitor). In these cases, the maximum frequency and minimum duty-cycle that the converter can provide, tend to have enough power to generate a high inrush current that could damage the switches.

When using simpler controllers, the maximum frequency of operation can get close to the resonance frequency, so even if this frequency is taken to the maximum it is not enough to avoid overcurrents, as the prior art using initial frequency at least is between 1.5 and 3 times the resonance frequency.

Additionally, it also produces a sudden output voltage increase and more output voltage ripple.

Therefore, there is a need in this technical field, for an accurate start-up control method that allows a more precise and discrete control of the power delivered to the output in order to reduce inrush currents, fast voltage slopes and high voltage ripples, especially during light load conditions.

### Summary of the invention

The invention is defined in the attached independent claim, and satisfactorily solves the above-mentioned drawbacks of the prior art, by providing a method of soft-start and output voltage control that comprises two stages, namely: a first stage or rising time wherein the output voltage is slowly increased until an output target voltage is reached, and subsequently a second stage or holding time during which the resonant converter output voltage is controlled to maintain it at the desired value.

The invention also refers to a DC-DC resonant converter system, comprising at least one resonant converter adapted to operate in accordance with the above-described method. In a preferred embodiment of the invention, the system comprises a plurality of resonant converters connected in series and/or in parallel.

The resonant converter according to the invention comprises: an input stage including a switch network with semiconductor switching devices for converting a DC input voltage into an AC voltage, a resonant tank or circuit connected at the output of the switch network which receives the AC voltage, and a converter controller for controlling switching of the semiconductor switching devices of the switch network.

The controller is adapted to operate the semiconductors switching devices during a start up process of the resonant converter, such that the switching frequency and the duty-cycle are kept constant during a first time interval (t1). Keeping switching frequency and duty-cycle constant during a first time interval (t1), prevent overcurrents at the first stage of the starting process, right when the capacitor is more discharged is when current rises, so the system hold for a certain time to stabilize the current or the slope of the current growth before turning to the next interval (t2).

Preferably, the first time interval (t1) starts in the instant when the converter is started. The duration of the first time interval (t1) can be determined based on one of the following criteria:
- for example, the first time interval (t1) is defined as the minimum time to guarantee the stabilization of LLC primary current in order to ensure ZVS mode, which can be easily determined by a skilled person in the art using routine calculations. Depending on the output voltage precharge range, this time could be slightly different (e.g. for a precharge range of 150V to 500V, the first time interval (t1) can be defined between 5 and 20ms).
- another criteria to determine the duration of the first time interval (t1) is based on output voltage measurement: the first time interval (t1) is defined as the time needed to achieve a certain output voltage threshold (e.g. for a precharge range of 150V to 500V, the output voltage threshold should be set around 100V).
- another criteria to determine the duration of the first time interval (t1), is the time needed to reach an stable output voltage, or a steady rate of increase.

In the present disclose, the term semiconductor switching device, refers to a variety of transistors or other power switching devices as known in the state of art (i.e: IGBT, MOSFET, etc), built in any kind of semiconductor technology (Si, SiC, GaN and or other wide-bandgap devices) but not limited to it, that alone, in combination or with partial utilization behave as a current bidirectional two-quadrant switching devices.

Preferably, the controller is adapted to operate the converter during said first time interval (t1) such that the switching frequency is maximum and duty-cycle is minimum, wherein the maximum frequency and minimum duty-cycle are determined by the capacity of the circuit components like: microcontroller, drivers, and power semiconductors switching devices.

The meaning of maximum switching frequency and minimum or maximum duty-cycle, belong to the common general knowledge of a skilled person in the art, as it is known that the maximum switching frequency and minimum duty-cycle are determined by the capacity of the hardware, that is, by the components implementing each particular application, like: the microcontroller, drivers, and power semiconductors switching devices.

Furthermore, for a skilled person in the art it is known that:
- Minimum duty-cycle is determined by the chosen driver topology (isolated power supplies, bootstrap, etc.),
- Maximum duty-cycle is defined as 50% (without considering dead time), as bigger duty-cycle would saturate transformer producing fatal situation,
- Maximum frequency is determined by state of the art of the chosen components, controller, and delays of the used components,
- Minimum frequency is determined by the output voltage operation range of the converter (for example <20%).

In addition, the controller is further adapted to operate the converter during a second time interval (t2) consecutive to the first time interval (t1) during the start up process, in a way that the switching frequency is progressively decreased and the duty-cycle is progressively increased. Preferably, the duty-cycle is progressively increased during the second time interval (t2) up to a maximum that is up to about 50% or below the maximum. The second time interval (t2) terminates when the duty-cycle reaches its maximum.

In a preferred embodiment of the invention the second time interval (t2) is within the range 5ms - 200ms, and more preferably within the range 10ms - 100ms.

The controller is further adapted to operate the converter during a third time interval (t3) once the duty-cycle has reached its maximum value, during which the switching frequency is progressively decreased (until a value dependent on the requested voltage and power), and the duty-cycle is kept constant (at its maximum value). This third time interval (t3) is consecutive to the second time interval (t2), and it lasts until a setpoint of the converter output voltage (Uout) is reached.

In a preferred embodiment of the invention the third time interval (t3) is within the range 20ms - 500ms, and more preferably within the range 50ms - 200ms.

The controller is further adapted such that when an output target voltage has been reached (end of third time interval (t3)), the resonant converter is operated in a burst mode to maintain a desired output target voltage during the rest of operation of the resonant converter.

Preferably, the controller is further adapted to operate the resonant converter in a burst mode during at least one of the: first, second or third time intervals.

Preferably, the controller is further adapted to operate the switch network to set drive pulses of the semiconductor switching devices to perform a Zero Voltage Switching (ZVS) operation of the network switch.

At the output of the resonant converter of the invention, an output stage is provided which can embodied as any kind of converter or rectifier either based on diode rectification or with synchronous rectification, to provide an output DC voltage of the resonant converter. This output stage or rectifier is coupled to the resonant circuit directly or by means of an isolation transformer.

In some embodiments a transformer is used for coupling the output stage or rectifier to the resonant tank, such that a primary winding of the transformer is coupled to the resonant tank, that is, the primary winding is part of the resonant tank, and the output stage or rectifier is connected to a secondary winding of the transformer.

The switch network can be embodied as a half bridge circuit, or as a full bridge circuit as the one shown in Figure 1, including one, two or more branches.

In a preferred embodiment, the switch network comprises at least one branch including two semiconductor switching devices connected in series between two input terminals of the switch network, and the controller is preferably adapted to maintain the two semiconductor switching devices switched-off during a dead time, which extends in between two consecutive semi-pulses generated by the switch network.

The dead time is a predetermined period time, and it is the minimum time that the switches have to be switched-off to avoid cross-conduction (the simultaneous turn-on of the switches of the same branch).

Preferably, the converter controller comprises a digital microcontroller.

Another aspect of the invention refers to a method for controlling a resonant converter, wherein the resonant converter preferably comprises an input stage including a switch network for converting a DC input voltage into an AC voltage, a resonant tank connected at the output of the switch network, and a converter controller for controlling switching of the semiconductor switching devices of the switch network, and an output stage or rectifier coupled to the resonant tank.

According to the method of the invention, the resonant converter is started up by keeping the switching frequency and the duty-cycle constant during a first time interval (t1). Preferably, the resonant converter is operated such that during this first time interval (t1), the switching frequency is maximum and the duty-cycle is minimum.

The duration of the first time interval (t1) is the same as the one defined above for the converter of the invention.

The method of the invention is preferably implemented in a resonant converter comprising: a switch network including semiconductor switching devices for converting a DC input voltage into an AC voltage, a resonant circuit connected at the output of the switch network which receives the AC voltage, and a converter controller for controlling switching of the semiconductor switching devices.

Preferably, the switch network is operated in a burst mode during the starting up process, which allows starting with a very low duty-cycle and high frequency (very low power and so inrush current) with the advantage of avoiding sudden increases of voltage with a better discretization and accuracy.

Once the start up process is completed when an output target voltage has been reached, a burst mode is also applied during a holding interval to maintain a desired output target voltage at the output of the resonant converter.

The burst mode in both the method and the converter of the invention, can be carried out either with constant ON and OFF times, or with variable ON and OFF times, for example dependant on algorithms.

The resonant converter and the control method according to the invention, combining: burst mode, duty-cycle and frequency variation as described above, achieves a more precise and discrete control of the power delivered to the output and, thus, limits inrush currents, fast voltage slopes and high voltage ripples. In addition, the resonant converter and the control method, provide more output voltage and power accuracy at start up process even with during light load conditions.

In the above-described resonant converter and control method according to the invention, the switching frequency and duty-cycle can be varied as a lineal function as a ramp up or down, or alternatively they can be varied as a curve, or as any algorithm. In the same manner, the duty-cycle starts at its minimum and the frequency at its maximum, but they may be started at another point as well as finishing in other intermediates.

Furthermore, in the above-described resonant converter and control method according to the invention, the duty-cycle control can be done only by modifying the pulse width. Alternatively, when the switch network is a full-bridge, the duty-cycle control can be done by varying the phase-shift between branches and maintaining the duty-cycle at 50%. Similarly, the phase-shift control can be extended to other switch network topologies having more than two branches.

During the above-mentioned holding interval, both for the converter and the method, once the output target voltage has been reached, it is maintained with an hysteresis by turning ON and OFF the converter, like a second and bigger burst mode. When the output voltage falls below a given threshold (target voltage minus a delta of voltage), then the burst mode operation is activated again; and conversely when the target voltage is reached again or when the target voltage is exceeded by a certain value, then the burst mode operation is deactivated.

Using a burst mode operation both during the start up process and the holding interval, provides a more precise control of the output voltage, and avoids voltage overshoots and higher output voltage ripples in very light load conditions.

Additionally, the invention provides a precise soft-start and output voltage control method for resonant converters in general, but especially adapted for applications that require very wide load conditions (e.g. high voltage and current/power range from 150V - 800V and 0,5A - 70A).

This wide load conditions determine the resonant tank components selection and the frequency of operation. For example, for the LLC-SRC converter shown in **Figure 1****,** the switching frequency could be below 100kHz when trying to supply 800V and 30A (high voltage and current/power), but the switching frequency could be above 300kHz when trying to deliver to the load 150V and 0,5A (lower voltage and current/power), thus, the resonant frequency of the circuit should be chosen high (e.g. 320 kHz) to allow giving this low power at low voltage.

As explained above, the maximum switching frequency is also limited by the capacity of the microcontroller / drivers / power semiconductors chosen for each implementation (e.g. 350kHz for a normal DSP and power MOSFETs), such that, the resonant frequency is high, but the maximum frequency allowed by the hardware is not much higher (e.g. ratio fmax / fresonant typically ranges between 1.05 to 1.3, for example for 350 / 320kHz = 1.1, or in other implementations ratio fmax / fresonant might be: 1.3, 1.25, 1.2,1.15).

There are microcontrollers with a much higher working frequency, but they are costly, so that the final product is more expensive, so the addition of a precharge circuit can be cost effective. In the present invention, due to the low cost of the controller and the low cost control process, the need for expensive controller or the need for a precharge circuit, are avoided.

Under these circumstances, precharging at the maximum switching frequency (e.g. 350kHz) and 50% of duty-cycle, generates a high current surge that could damage the semiconductors. Therefore, the present invention is especially advantageous when used as a precharge / soft-start method with a lower duty-cycle at the beginning, an especial switching pattern and a burst method, without the use of a specific precharge circuit.

This is also less critical on those hardware systems that allow switching at very high frequencies, although this leads to an unnecessary oversize and over cost.

Additionally, the present invention provides a fast and precise soft-start and output voltage control method specially adapted for light load conditions (e.g. allows controlling the voltage for powers up to 0.003% of nominal power), which is especially advantageous for those applications that require high-power converters with fast output dynamics (e.g. precharging from 0V to 800V in less than 100-200ms). Besides, this implies a reduction of the size of output capacitors of the converter (e.g. 5 - 20uF for a 10 - 20kW equipment, the most used technology is based on MKP capacitors, instead of bulky aluminum capacitors of hundreds or thousands of uF).

Moreover, the present invention provides a precise soft-start method as described above, with a switching pattern that reduces the semiconductors stress, which is especially beneficial for systems with wide output load conditions and also with low fmaximum / fresonant ratio) to avoid high frequency requirements at low power. (e.g. ratio fmax / fresonant typically ranges between 1.05 to 1.3, for example for 350 / 320kHz = 1.1, or in other implementations ratio fmax / fresonant might be: 1.3, 1.25, 1.2, 1.15).

The precise soft-start method of the invention eliminates the need of additional precharge system (e.g. relay + precharge resistors + control) between the converter and the load. For example, in the case of Vehicle On Board Chargers (OBC), the traditional systems have a power relay with current limiting resistors between the OBC and the battery, which is used to precharge the OBC's output capacitors when starts the charge of the battery.

The invention can be particularly applied for automotive field applications, but it can also be applied to any power supply unit or power-converter device that includes a DC to DC converter.

### Brief description of the drawings

Preferred embodiments of the invention are henceforth described with reference to the accompanying drawings, wherein:
Figure 1.- shows an electric diagram of an example of LLC-SRC topology with a diodes rectifier at the output, according to the prior art. Figure 1 also shows one practical example of implementing the hardware of the present invention.
Figure 2: shows a graph of a classical soft-start two stage method, according to the prior art.
Figure 3: shows a graph of a soft-start method varying frequency and duty-cycle at the same time, according to the prior art.

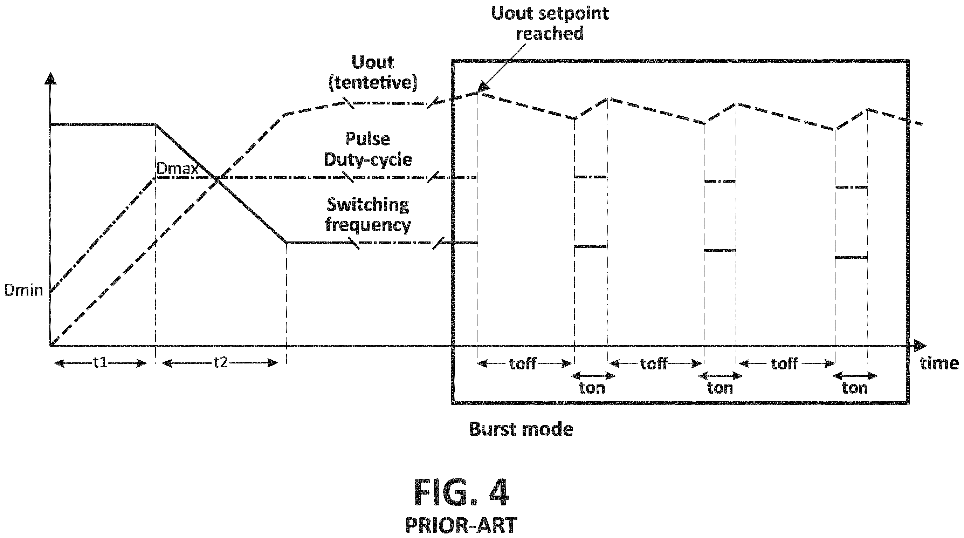

Figure 4: shows a graph of a classical burst mode sequence, according to the prior art.
Figure 5: shows a graph of a soft-start and low load voltage maintenance control method according to the invention. A framed area (zoom) is enlarged in Figure 7.
Figure 6: shows a graph of an example of a switching pattern during first and second time intervals (t1,t2) that take profit of ZVS, according to the invention. Upper and center graphs shows voltage pulses at the gates of switches (SW1,SW4) (upper graph), and (SW2,SW3) (center graph), to obtain an output voltage (Uab) (bottom graph).
Figure 7: shows an enlarged view of the framed area (Zoom) identified in the graph of Figure 5.

### Preferred embodiment of the invention

**Figure 1** shows an exemplary implementation of a LLC-SRC resonant converter according to the invention, wherein the input stage is a switch network as a full bridge circuit, and the output stage is a bridge diode rectifier.

It is understood that the invention encompass any type of resonant converter, so that in other practical implementations, the switch network can be embodied as a half bridge circuit, or any other typology with more than two branches, and the output stage can be embodied as any kind of output stage or rectifier either based on diode rectification or with synchronous rectification, to provide an output DC voltage of the resonant converter. This output stage or rectifier is coupled to the resonant circuit directly or by means of an isolation transformer.

Going back to the embodiment of **Figure 1****,** the resonant converter shown therein, comprises a full-bridge circuit (1), as switch network, including a first branch (1a) having first and second semiconductor switching devices (SW1,SW2) connected in series, and second branch (1b) including a third and fourth semiconductor switching devices (SW3,SW4) connected in series, wherein the first and second branches (1a,1b) are connected in parallel with respect to each other between two input terminals (2,3) of the converter, such that a DC input voltage (Uin) connected at the input terminals (2,3) is converted in a known manner in an AC voltage at the output (Uab) of the full-bridge circuit (1).

The resonant converter further comprises a resonant circuit (4) having a capacitor (C) and an inductor (L) connected in series at the output (Uab) of the full-bridge circuit (1). The output (Uab) is taken at the two center connections between the semiconductor switching devices of each branch.

The resonant converter includes an isolation transformer (Tr) coupled at the output (Uab) of the switch network (1), such that a primary winding (tr1) of the transformer is coupled in series with the capacitor (C) and inductor (L), so that this primary winding (tr1) is also part of the resonant tank (4).

The output stage is a full bridge diode rectifier (5) connected to the secondary winding (tr2) of the transformer (Tr), followed by an output capacitor (C1) to smooth the DC output voltage (Uout) (5).

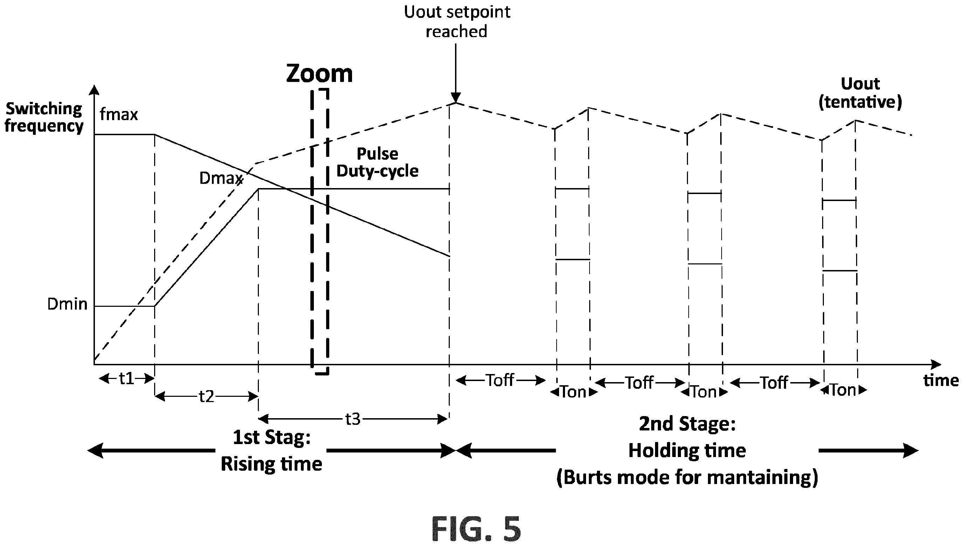

The converter controller (not shown) for controlling switching of the semiconductor switching devices (SW1-SW4), is preferably implemented as a digital microcontroller, and it is adapted, that is, it is programmed to implement the control method of the invention, as represented in **Figure 5****.**

The invention provides a control method of soft-start and output voltage control for resonant converters, wherein the converter is operated as to perform two main sequential stages as shown in **Figure 5****:**

### First stage: Rising time, starting up process:

This starting up process involves three sequential time intervals (t1 ― t3):
**t1:** is a first time interval which starts preferably right at the instant when the converter is started, wherein the semiconductors switching devices of the switch network are operated such that the duty-cycle and the switching frequency are kept constant, preferably the duty-cycle is kept at its minimum value (Dmin), and the switching frequency is kept at its maximum value (fmax).
t2: is a second time interval consecutive to the first time interval (t1), during which the duty-cycle is increased from its minimum to a maximum, that in this case is close to 50% or to a predefined value below the maximum. During this second time interval, the switching frequency is slowly decreased from its maximum value (fmax), for example as a lineal function or as a ramp down as shown in **Figure 5****.** This second time interval (t2) terminates when the duty-cycle reaches its maximum value (Dmax).
**t3:** is a third time interval, consecutive to the second time interval (t2), during which the switching frequency continue decreasing, until the output voltage (Uout) reaches the desired setpoint which depends on the voltage and power requested in each case. During this third time interval, the duty-cycle is maintained as its maximum value (Dmax).

As it can be noted in **Figure 5****,** during the starting up process, that is, during time intervals t1 to t3, the output voltage (Uout) starting at zero is gradually increased with a controlled slew-rate / slope.

Preferably, the second time interval (t2) is shorter than the third time interval (t3) to reach quickly a situation where the control of the converter depends only on the switching frequency.

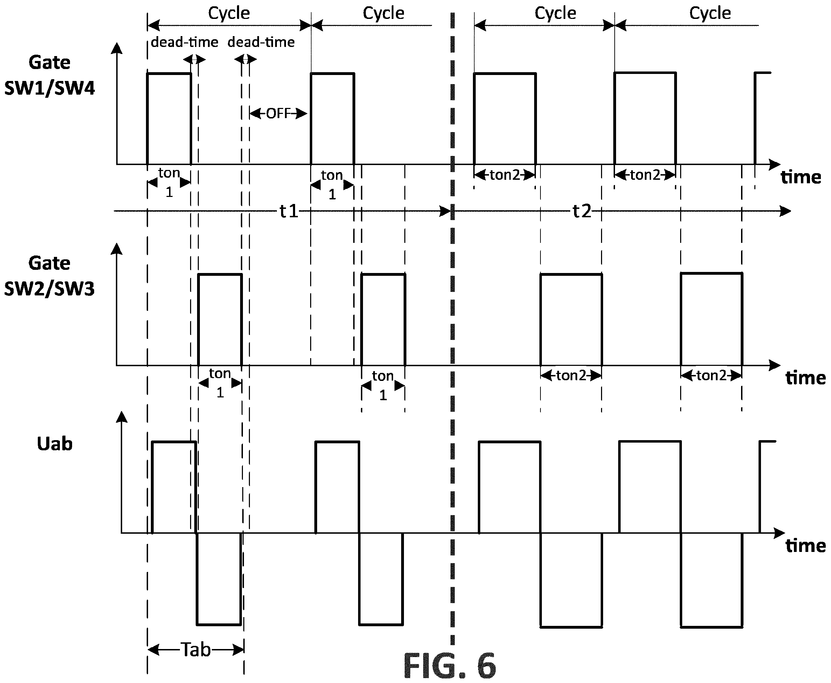

As represented in **Figure 6****,** the switching technique used during time intervals (t1 ― t2) is based on switching the two complementary switches of the two branches (1a, 1b), for example (SW1,SW4) and (SW2,SW3) in the switch network of **Figure 1****,** to set drive semi-pulses of the semiconductor switching devices in such a way that Zero Voltage Switching (ZVS) of the switch network is guaranteed and surge current is low.

More in detail as shown in Figure 6, during first time interval (t1) and second time interval (t2), for the generation of a first semi pulse complementary switches (SW1,SW4) are switched ON and the other switches (SW2, SW3) remain in OFF state. After the generation of the first semi pulse, switches (SW1,SW4) are switched OFF maintaining switches (SW2, SW3) OFF, such that all switches are kept OFF for a first dead time.

After the first dead time and for the generation of a second semi pulse, the other complementary switches (SW2,SW3) are switched ON while switches (SW1,SW4) are kept in OFF state.

After the generation of the second semi pulse, that is, once a full cycle formed by the first and second semi pulses (Uab) (lower graph in Figure 6) of duration (Tab), switches (SW2,SW3) are switched OFF, while switches (SW1,SW4) are kept OFF, such that all switches are again kept OFF for a second dead time.

For the rest of the period of the Uab signal, that is, until the beginning of next semi-pulse of the next cycle, all switches (SW1,SW2,SW3,SW4) are kept OFF for an OFF time as shown in **Figure 6****.**

The duration of the dead time is constant, whereas the OFF time is constant during first and third time intervals t1, t3. The OFF time might be lower, equal or greater than the dead time. The OFF time is greater than the dead time during the first time interval (t1). During second time interval (t2) the OFF time is zero when the maximum duty-cycle of the system has been reached, that is, when there is only dead time between semi-pulses. The OFF-time is zero in time period (t3), when the maximum duty-cycle (Dmax) of the system has been reached, if the duty-cycle is lower than the maximum, then the OFF time should be more than 0.

As shown in **Figure 6****,** there is a dead time right after the first and second semi-pulses, that is, all four switches (SW1 - SW4) are held in an OFF state right after the generation of the first semi-pulse, and there is also a dead time during which all four switches (SW1 - SW4) are held in an OFF state, right after the generation of the second semi-pulse.

The dead time is the minimum time that the switches have to be switched-off to avoid short circuits between switches of the same branch. Typically, semiconductor switches of Si require a deadtime below of 200ns, better between 150 to 200ns; for SiC below of 150ns, better between 50 to 150ns; and for GaN below 150ns, better between 20 to 150ns, for a switching frequency within the range 100Khz ― 1MHz.

In addition to the above-described dead time, there is also an OFF-time after the second dead time before the semi-pulse of the next cycle begins, such that all four switches (SW1-SW4) are maintained in OFF state during the OFF-time.

The same switching technique described above including the dead time and OFF-time periods, is carried out when a converter with only one branch with two semiconductor switching devices is used.

This above-described switching technique increases the (Uab) maximum frequency (1/T_{ab}) while maintaining a 50% duty-cycle signal or to a predefined value below the maximum, and thus guarantee ZVS and reduce surge currents. In addition, during the OFF-time during which all four switches (SW1-SW4) are turned-OFF, the current is diminished and so the power delivered to the load. Therefore, this switching technique allows: a reduction of surge current during start-up, ZVS during this dead and/or OFF times and a voltage and power accuracy improvement at light load conditions.

As shown in **Figure 6****,** during interval (t1) the duration of the semi-pulses is constant during the period, however during interval (t2) the semi-pulses are wider than in the first time interval (t1), and their duration increase progressively in time. The reason is due to a decreasing of the switching frequency increasing the cycle and the increasing of the duty-cycle.

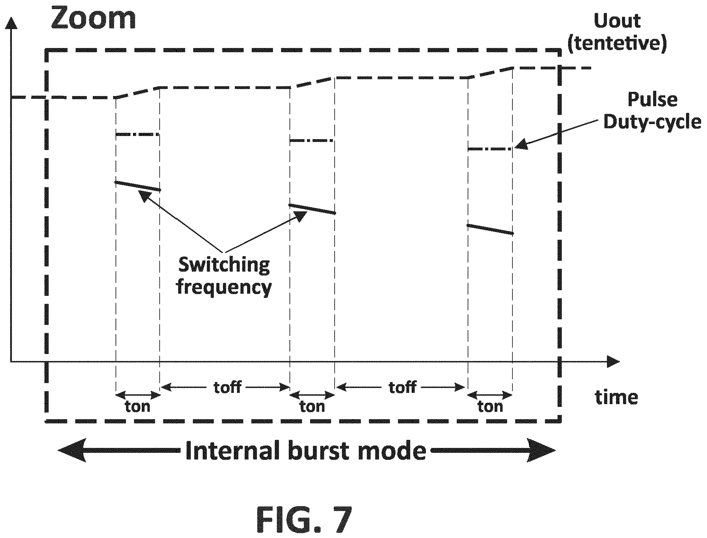

As represented in Figure 7, the controller is further adapted to operate the switch network in a burst mode during at least one of the: first, second or third time intervals (t1, t2 and t3). Preferably, a burst mode operation is performed during the entire first stage of rising time.

During the burst mode Ton and Toff periods are applied while the duty-cycle and switching frequency is constant or modified, as represented in Figure 7, which allows starting with a very low duty-cycle and highest frequency (very low power and so inrush current) with the advantage of avoiding sudden increases of voltage with a better discretization and accuracy.

### Second stage: holding time:

This second stage starts once the output target voltage (Uout) has been reached (end of third time interval t3), and it is maintained with a hysteresis by turning ON and OFF the switch network, like a second and bigger burst mode. When the output voltage falls below a given threshold (target voltage minus a delta of voltage), then the burst mode operation is activated again; and when the target voltage is reached again, or when the target voltage is exceeded by a certain value, then the burst mode operation is discontinued.

During this second stage, like in the first one, the burst mode operation is kept, as represented in **Figure 5****,** which allows controlling the output voltage (Uout) more precisely, avoiding voltage overshoots and higher output voltage ripples in very light load conditions.

Other preferred embodiments of the present invention are described in the appended dependent claims and the multiple combinations of those claims.

## Claims

1. A resonant converter system comprising at least one resonant converter:
wherein the resonant converter in turn comprises:
an input stage as a switch network (1) including semiconductor switching devices for converting a DC input voltage (Uin) into an AC voltage,
a resonant circuit (4) connected at the output (Uab) of the switch network (1),
a controller for controlling a switching frequency and the duty-cycle of the switch network (1),
wherein the controller is adapted to operate the switch network (1) during a start up process of the same, such that the switching frequency and the duty-cycle are kept constant during a first time interval (t1) when the converter is started.

2. A resonant converter system according to claim 1, wherein the controller is adapted to operate the switch network (1) during said first time interval (t1) such that the switching frequency is maximum and duty-cycle is minimum.

3. A resonant converter system according to claim 1 or 2, wherein the controller is further adapted to operate the switch network (1) during a second time interval (t2) consecutive to the first time interval (t1), during which the switching frequency is progressively decreased and the duty-cycle is progressively increased.

4. A resonant converter system according to claim 3, wherein the duty-cycle is progressively increased during the second time interval (t2) up to a maximum, preferably about 50 % or to a predefined value below the maximum.

5. A resonant converter system according to any of the preceding claims, wherein the controller is further adapted to operate the switch network (1) during a third time interval (t3) during which the switching frequency is progressively decreased and the duty-cycle is kept constant at its maximum, and wherein the third time interval (t3) lasts until a setpoint of the converter output voltage (Uout) is reached.

6. A resonant converter system according to any of the preceding claims, wherein the controller is further adapted to set drive pulses of the semiconductor switching devices to perform a Zero Voltage Switching (ZVS) operation of the switch network (1).

7. A resonant converter system according to any of the preceding claims, wherein the controller is further adapted to operate the switch network (1) in a burst mode during at least one of the: first, second or third time intervals.

8. A resonant converter system according to any of the preceding claims, wherein the switch network (1) comprises at least one branch (1a,1b) including two semiconductor switching devices (SW1,SW2,SW3,SW4) connected in series between two input terminals (2,3) of the switch network (1), and wherein the controller is further adapted to operate the semiconductor switching devices (SW1,SW2,SW3,SW4) to generate a first and second semi pulses and a first dead time in between first and second semi pulses, and a second dead time also after the second semi pulse, such that during the first and second dead times all switching devices are in OFF state.

9. A resonant converter system according to claim 8, wherein the controller is further adapted to maintain all the semiconductor switching devices (SW1,SW2,SW3,SW4) in an OFF state during an OFF time period after the second dead time and until the beginning of next cycle, and wherein the OFF time is greater than the dead time while the duty-cycle is in at least the first time interval (t1), and wherein the OFF time is zero when the duty-cycle reaches its maximum value (Dmax).

10. A resonant converter system according to any of the preceding claims, wherein the controller is further adapted such that when an output target voltage has been reached, the switch network (1) is operated in a burst mode to maintain a desired output target voltage.

11. A resonant converter system according to any of the preceding claims, further comprising an output stage or a rectifier connected or coupled to the resonant circuit and adapted for converting an AC voltage at the output of the resonant circuit into an a DC output voltage (Uout) of the resonant converter, and wherein preferably the system further comprises a transformer, and wherein the output stage or rectifier is coupled to the resonant circuit by means of the transformer.

12. Method for controlling a resonant converter, comprising:
starting up the resonant converter by maintaining switching frequency and duty-cycle constant during a first time interval (t1), wherein preferably the switching frequency is maximum and the duty-cycle is minimum.

13. Method according to claim 12, wherein the converter is operated during a second time interval (t2) consecutive to the first time interval (t1), during which the switching frequency is progressively decreased and the duty-cycle is progressively increased.

14. Method according to any of the claims claim 12 to 13, wherein the switch network (1) is operated in a burst mode during the first time interval (t1) or the second time interval (t2) or both, and preferably the switch network (1) is also operated in a burst mode once an output target voltage has been reached, to maintain a desired output target voltage at the output of the resonant converter.

15. Method according to any of the claims 12 to 14, wherein the converter is operated during a third time interval (t3) consecutive to the second time interval (t2), during which the switching frequency is progressively decreased and the duty-cycle is kept constant, and wherein the third time interval (t3) lasts until a setpoint of the converter output voltage (Uout) is reached.
